# EUROPÄISCHE PATENTSCHRIFT

(11) **EP 4 099 298 B1**
(45) Veröffentlichungstag und Bekanntmachung des Hinweises auf die Patenterteilung: **15.05.2024**
(21) Anmeldenummer: 21176769.4
(22) Anmeldetag: 31.05.2021
(51) Int. Cl.: G08G 1/16, G01S 15/931, H04L 67/12, G01S 15/06, G01S 15/58, G01S 15/86, G01S 17/06, G01S 17/58, G01S 17/931

(54) **VERFAHREN ZUR GEFAHRENDETEKTION UND/ODER KOLLISIONSVERMEIDUNG EINES SICH BEWEGENDEN FAHRZEUGS, SYSTEM, COMPUTERPROGRAMM UND COMPUTERLESBARES MEDIUM**
METHOD FOR DETECTING HAZARDS AND / OR COLLISION AVOIDANCE IN A MOVING VEHICLE, SYSTEM, COMPUTER PROGRAM AND COMPUTER READABLE MEDIUM
PROCÉDÉ DE DÉTECTION DU DANGER ET/OU DE PRÉVENTION D'UNE COLLISION D'UN VÉHICULE EN DÉPLACEMENT, SYSTÈME, PROGRAMME INFORMATIQUE ET SUPPORT LISIBLE PAR ORDINATEUR

(43) Veröffentlichungstag der Anmeldung: 07.12.2022
(73) Patentinhaber: Deutsche Telekom AG, 53113 Bonn (DE)
(72) Erfinder: SCHMITT, Florian-Leon, 53227 Bonn (DE); SUDHOLT, Frank, 53604 Bad Honnef (DE)
(74) Vertreter: Schwöbel, Thilo K.

(56) Entgegenhaltungen:
- WO-A1-2020/070909
- DE-A1-102005 055 347
- DE-A1-102017 219 056
- DE-T2-602005 004 365
- US-A1- 2013 194 127
- US-A1- 2020 174 469
- US-A1- 2020 189 467
- US-B1- 9 483 948
- SCHULZ YANNICK ET AL: "Hearing What You Cannot See: Acoustic Vehicle Detection Around Corners", IEEE ROBOTICS AND AUTOMATION LETTERS, IEEE, Bd. 6, Nr. 2, 25. Februar 2021 (2021-02-25), Seiten 2587-2594, XP011844301, DOI: 10.1109/LRA.2021.3062254 [gefunden am 2021-03-15]

## Beschreibung

### Stand der Technik

Die Erfindung betrifft ein Verfahren zur Gefahrendetektion und/oder Kollisionsvermeidung eines sich bewegenden Fahrzeugs mit mindestens einem sich bewegenden Objekt, wobei das wenigstens eine sich bewegende Objekt in einem ersten Zeitpunkt in gerader Sichtlinie ausgehend vom Fahrzeug optisch verdeckt oder nicht sichtbar ist und in einem zweiten Zeitpunkt vom Fahrzeug aus sichtbar oder detektierbar ist.

Die Erfindung betrifft des Weiteren ein System zur Gefahrendetektion und/oder Kollisionsvermeidung eines sich bewegenden Fahrzeugs mit mindestens einem sich bewegenden Objekt, wobei das wenigstens eine sich bewegende Objekt in einem ersten Zeitpunkt in gerader Sichtlinie ausgehend vom Fahrzeug optisch verdeckt oder nicht sichtbar ist und in einem zweiten Zeitpunkt vom Fahrzeug aus sichtbar oder detektierbar ist.

Die Erfindung betrifft ferner ein Telekommunikationsnetz, umfassend wenigstens eine Edge-Cloud-Einrichtung, geeignet zur Gefahrendetektion und/oder Kollisionsvermeidung bei einem erfindungsgemäßen System bzw. mittels eines erfindungsgemäßen Verfahrens.

Des Weiteren betrifft die Erfindung ein Computerprogramm umfassend Befehle, mit deren Hilfe die Schritte eines erfindungsgemäßen Verfahrens durchführbar sind, und ein computerlesbares Medium, vorgesehen zur Speicherung eines Computerprogramms, oder ein Datenträgersignal, vorgesehen zur Übertragung eines Computerprogramms, wobei das computerlesbare Medium oder das Datenträgersignal das erfindungsgemäße Computerprogramm speichert oder überträgt.

Zur Realisierung von zukünftigen Verkehrssystemen, insbesondere umfassend autonom fahrende bzw. autonom gesteuerte Fahrzeuge, jedoch in gleicher Weise auch mit Blick auf nicht autonom oder nicht vollständig autonom gesteuerte Fahrzeuge, ist es wünschenswert, wenn möglichst viele Verkehrsteilnehmer in der Lage sind, mögliche Gefahrensituationen möglichst frühzeitig zu erkennen. Dies ist insbesondere dann zumindest schwieriger möglich, wenn sich zwei Verkehrsteilnehmer zumindest initial, d.h. zu einem ersten (früheren) Zeitpunkt, nicht entlang einer direkten Sichtlinie erkennen oder detektieren in der Lage sind.

Weitere Verfahren sind aus den Druckschriften WO 2020/070909 A1, Schulz et al., IEEE Robotics and Automation Letters, IEEE, 2021, 6, 2587-2594, DE 60 2005 004365 T2, DE 10 2005 055347 A1, US 2013/194127 A1, DE 10 2017 219056 A1, US 2020/174469 A1, US 9 483 948 B1 und US 2020/189467 A1 bekannt.

### Offenbarung der Erfindung

Der Erfindung liegt die Aufgabe zugrunde, ein Verfahren zur Gefahrendetektion und/oder Kollisionsvermeidung eines sich bewegenden Fahrzeugs mit mindestens einem sich bewegenden Objekt bereitzustellen, wobei das wenigstens eine sich bewegende Objekt in einem ersten Zeitpunkt in gerader Sichtlinie ausgehend vom Fahrzeug optisch verdeckt oder nicht sichtbar ist und in einem zweiten Zeitpunkt vom Fahrzeug aus sichtbar oder detektierbar ist.

Die Aufgabe wird erfindungsgemäß gelöst durch ein Verfahren gemäß Anspruch 1.

Es ist dadurch gemäß der vorliegenden Erfindung in vorteilhafter Weise möglich, dass in vergleichsweise einfacher Art und Weise die Detektion einer Gefahr im Verkehr bzw. im Straßenverkehr bzw. die Vermeidung einer Kollision bewirkt werden kann.

Erfindungsgemäß ist es vorgesehen, dass ein sich bewegendes Fahrzeug ein sich bewegendes Objekt bereits zu einem ersten Zeitpunkt (in welchem das wenigstens eine sich bewegende Objekt in gerader Sichtlinie ausgehend vom Fahrzeug optisch verdeckt oder nicht sichtbar ist) zumindest teilweise erkennbar ist, so dass dann - in einem zweiten Zeitpunkt, in welchem das Objekt vom Fahrzeug aus sichtbar oder detektierbar ist - das Objekt schneller, besser und/oder sicherer erkannt werden und/oder darauf reagiert werden kann. Hierzu weist das Fahrzeug wenigstens einen LOS-Sensor, line-of-sight sensor, und wenigstens einen akustischen NLOS-Sensor, non-line-of-sight sensor, auf. Das erfindungsgemäße Verfahren weist die folgenden Verfahrensschritte auf:
-- in einem ersten Schritt werden zum ersten Zeitpunkt erste Sensorsignale mittels des wenigstens einen akustischen NLOS-Sensors generiert, wobei - nach einer Auswertung der ersten Sensorsignale - das sich bewegende Objekt detektiert wird, wobei Daten hinsichtlich der Position und/oder Bewegungsrichtung und/oder Geschwindigkeit und/oder Größe des sich bewegenden Objekts bestimmt oder berechnet werden, -- in einem zweiten Schritt wird das sich bewegende Objekt mittels zweiten vom wenigstens einen LOS-Sensor generierten Sensorsignalen zum zweiten Zeitpunkt detektiert und/oder erkannt, insbesondere aufgrund der Daten hinsichtlich der Position und/oder Bewegungsrichtung und/oder Geschwindigkeit und/oder Größe des sich bewegenden Objekts.

Gemäß einer bevorzugten Ausführungsform der vorliegenden Erfindung ist es vorgesehen, dass die im ersten Schritt generierten ersten Sensorsignale mittels des wenigstens einen akustischen NLOS-Sensors aufgrund von akustischen Signalen generiert werden, die vom sich bewegenden Objekt ausgehen, sich über einen indirekten Ausbreitungspfad ausbreiten und - entweder nach wenigstens einer Reflexion an einer Reflexionsfläche und/oder aufgrund von Beugung (bzw. Diffraktion) der akustischen Signale - vom wenigstens einen akustischen NLOS-Sensor detektiert oder empfangen werden.

Gemäß einer weiteren Ausführungsform der vorliegenden Erfindung ist es vorgesehen, dass das Fahrzeug akustische Primärsignale aussendet und die vom sich bewegenden Objekt ausgehenden akustischen Signale Echosignale der Primärsignale sind, die vom sich bewegenden Objekt reflektiert wurden.

Hierdurch ist es erfindungsgemäß in vorteilhafter Weise möglich, dass erfindungsgemäß eine verbesserte Detektion des Objekts möglich ist.

Gemäß der vorliegenden Erfindung ist es vorgesehen, dass die Daten hinsichtlich der Position und/oder Bewegungsrichtung und/oder Geschwindigkeit und/oder Größe des sich bewegenden Objekts außerhalb des Fahrzeugs bestimmt oder berechnet werden.

Hierdurch ist es erfindungsgemäß in vorteilhafter Weise möglich, dass die außerhalb des Fahrzeugs zur Verfügung stehenden größeren Rechenkapazitäten bzw. Berechnungsmöglichkeiten zur Bestimmung (bzw. auch lediglich zur vergleichsweise ungefähren Bestimmung) der Position und/oder Bewegungsrichtung und/oder Geschwindigkeit und/oder Größe des sich bewegenden Objekts verwendet werden können.

Gemäß der vorliegenden Erfindung ist es vorgesehen, dass zur Bestimmung oder Berechnung außerhalb des Fahrzeugs der Daten hinsichtlich der Position und/oder Bewegungsrichtung und/oder Geschwindigkeit und/oder Größe des sich bewegenden Objekts zumindest ein Teil der zum ersten Zeitpunkt generierten ersten Sensorsignale mittels einer Kommunikationsschnittstelle des Fahrzeugs an eine Edge-Cloud-Einrichtung eines Telekommunikationsnetzes übertragen wird und die berechneten Daten hinsichtlich der Position und/oder Bewegungsrichtung und/oder Geschwindigkeit und/oder Größe des sich bewegenden Objekts mittels der Kommunikationsschnittstelle zum Fahrzeug übertragen werden.

Dadurch ist es erfindungsgemäß vorteilhaft möglich, dass solche Berechnungen nicht nur genauer und schneller durchführbar sind (gegenüber einer Berechnung im Fahrzeug), sondern auch Informationen über besondere Gefahrenhäufungspunkte detektiert bzw. gesammelt werden können.

Gemäß einer weiteren Ausführungsform der vorliegenden Erfindung ist es vorgesehen, dass die Detektion oder Erkennung eines beliebigen Objekts mittels des wenigstens einen LOS-Sensors periodisch mit wenigstens einer vorgegebenen Periodendauer erfolgt, wobei die über die Kommunikationsschnittstelle des Fahrzeugs empfangenen berechneten Daten hinsichtlich der Position und/oder Bewegungsrichtung und/oder Geschwindigkeit und/oder Größe des sich bewegenden Objekts wenigstens eine ganze Periodendauer vor dem zweiten Zeitpunkt erfolgt, um insbesondere die Detektion des sich bewegenden Objekts mittels des wenigstens einen LOS-Sensors schneller und/oder präziser durchführen zu können.

Gemäß der vorliegenden Erfindung ist es vorgesehen, dass die über die Kommunikationsschnittstelle des Fahrzeugs empfangenen berechneten Daten hinsichtlich der Position und/oder Bewegungsrichtung und/oder Geschwindigkeit und/oder Größe des sich bewegenden Objekts im Fahrzeug genutzt werden, um den wenigstens einen LOS-Sensor oder dessen Auswertungslogik auf die Detektion und/oder Erkennung des sich bewegenden Objekts vorbereitet wird.

Des Weiteren wird die Aufgabe gelöst durch ein System gemäß Anspruch 5.

Es ist dadurch gemäß der vorliegenden Erfindung in vorteilhafter Weise möglich, ein zum erfindungsgemäßen Verfahren korrespondierendes erfindungsgemäßes System bereitzustellen und somit zu einer verbesserten Gefahrendetektion bzw. Kollisionsvermeidung zu gelangen.

Des Weiteren wird die Ausgabe gelöst durch ein Computerprogramm umfassend Befehle, mit deren Hilfe die Schritte eines erfindungsgemäßen Verfahrens durchführbar sind, wenn das Computerprogramm auf einer programmierbaren Einrichtung des Fahrzeugs und einer Edge-Cloud-Einrichtung, ausgeführt wird.

Des Weiteren wird die Aufgabe gelöst durch ein computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das erfindungsgemäße Computerprogramm speichert oder überträgt oder wobei das computerlesbare Medium oder das Datenträgersignal den auf einer programmierbaren Einrichtung des Fahrzeugs und einer Edge-Cloud-Einrichtung, auszuführenden Teil des erfindungsgemäßen Computerprogramms speichert oder überträgt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

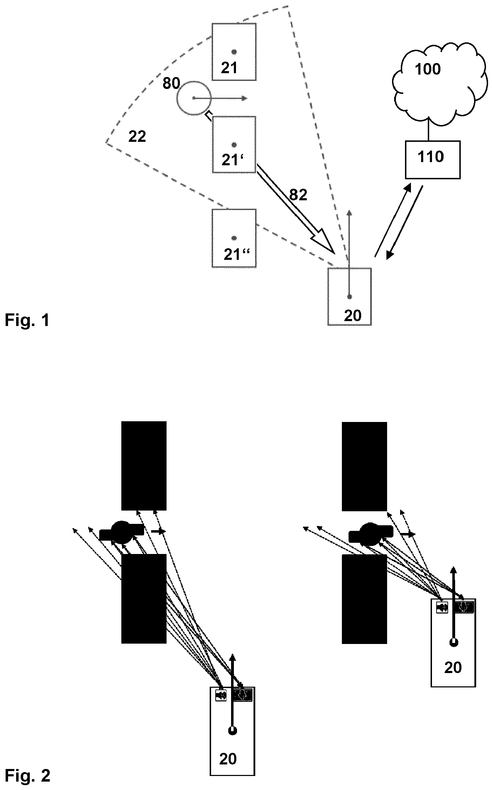

**Figur 1 und Figur 2** zeigen jeweils eine schematische Situation zur Veranschaulichung des erfindungsgemäßen Verfahrens zur Gefahrendetektion und/oder Kollisionsvermeidung eines sich bewegenden Fahrzeugs mit mindestens einem sich bewegenden Objekt.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

Die vorliegende Erfindung wird in Bezug auf bestimmte Ausführungsformen und mit Bezug auf bestimmte Zeichnungen beschrieben, aber die Erfindung ist nicht darauf beschränkt, sondern nur durch die Ansprüche. Die beschriebenen Zeichnungen sind nur schematisch und nicht einschränkend. In den Zeichnungen kann die Größe einiger Elemente übertrieben sein und nicht im Maßstab zur Veranschaulichung gezeichnet werden.

Wenn ein unbestimmter oder ein bestimmter Artikel verwendet wird, wenn auf ein einzelnes Substantiv Bezug genommen wird, z.B. "ein", "eine", "der", "die", "das", schließt dies einen Plural dieses Substantivs ein, sofern nicht ausdrücklich etwas anderes angegeben ist.

Darüber hinaus werden die Begriffe erste, zweite, dritte und dergleichen in der Beschreibung und in den Ansprüchen zur Unterscheidung zwischen ähnlichen Elementen und nicht unbedingt zur Beschreibung einer sequenziellen oder chronologischen Reihenfolge verwendet. Es ist zu verstehen, dass die so verwendeten Begriffe unter geeigneten Umständen austauschbar sind und dass die Ausführungsformen der hierin beschriebenen Erfindung in anderer Abfolge als den hierin beschriebenen oder veranschaulichten funktionieren können.

In Figur 1 ist schematisch eine Situation zur Veranschaulichung des erfindungsgemäßen Verfahrens zur Gefahrendetektion und/oder Kollisionsvermeidung eines sich bewegenden Fahrzeugs 20 mit mindestens einem sich bewegenden Objekt 80 dargestellt. Nachfolgend wird das Fahrzeug 20 (bzw. ein anderer Verkehrsteilnehmer) auch mit der Bezeichnung FZG1 bezeichnet und das sich bewegende Objekt 80 auch mit der Bezeichnung OBJ1. Dargestellt ist etwa die Situation, in der ein Fahrzeug 20/FZG1 an einer Reihe parkender Autos 21, 21', 21" oder sonstiger Elemente oder Gegenstände vorbeifährt. Das Objekt 80/OBJ1 (bzw. das sich bewegende Objekt 80 - insbesondere ebenfalls ein Fahrzeug oder aber auch ein anderer Verkehrsteilnehmer) bewegt sich ebenfalls und droht mit dem Fahrzeug 20 zu kollidieren.

Da sich die Richtungen (bzw. Bewegungsrichtungen; in Figur 1 markiert mittels eines Pfeils ausgehend vom Zentrum jeweils des Fahrzeugs 20/FZG1 bzw. des Objekts 80/OBJ1) von Fahrzeug FZG1 und Objekt OBJ1 kreuzen, besteht Kollisionsgefahr. Das Objekt 80/OBJ1 kann z.B. ein Fahrradfahrer, ein Tier, eine Plastiktüte oder ein weiteres Fahrzeug sein.

Es besteht (zunächst, d.h. in einem ersten Zeitpunkt, welcher in Figur 1 dargestellt ist) kein Sichtkontakt zwischen dem Fahrzeug 20/FZG1 und dem Objekt 80/OBJ1, d.h. das wenigstens eine sich bewegende Objekt 80 ist im ersten Zeitpunkt in gerader Sichtlinie 50 ausgehend vom Fahrzeug 20 optisch verdeckt oder nicht sichtbar, weil ein Gegenstand - etwa eines der parkenden Autos 21, 21`, 21" oder auch ein Haus, ein sonstiges Gebäude, ein sich lediglich vergleichsweise langsam bewegendes Fahrzeug oder dergleichen - das Objekt 80 aus der Perspektive des Fahrzeugs 20 verdeckt. Erst in einem zweiten Zeitpunkt ist das Objekt 80 vom Fahrzeug 20 aus sichtbar oder detektierbar. In Figur 2 ist sowohl die dem ersten Zeitpunkt entsprechende Situation (vgl. die Darstellung auf der linken Seite in Figur 2) als auch die dem zweiten Zeitpunkt entsprechende Situation (vgl. die Darstellung auf der rechten Seite in Figur 2) dargestellt.

Sofern das Fahrzeug 20 lediglich über einen bzw. wenigstens einen LOS-Sensor, d.h. einen sog. line-of-sight sensor, verfügt, ist das Objekt 80 lediglich im zweiten Zeitpunkt durch das Fahrzeug 20 bzw. durch einen LOS-Sensor detektierbar, d.h. insbesondere im ersten Zeitpunkt noch nicht detektierbar.

Erfindungsgemäß sieht das Verfahren zur Gefahrendetektion und/oder Kollisionsvermeidung nun vor, dass das sich bewegende Fahrzeug 20 - neben dem wenigstens einen LOS-Sensor, line-of-sight sensor - auch wenigstens einen akustischen NLOS-Sensor, non-line-of-sight sensor, aufweist. Mittels des akustischen NLOS-Sensors ist das Fahrzeug 20 in der Lage, das Objekt 80 bereits zeitlich vor dem zweiten Zeitpunkt (d.h. insbesondere zum ersten Zeitpunkt) zu detektieren.

Das erfindungsgemäße Verfahren weist nun die folgenden Schritte auf:
-- in einem ersten Schritt werden zum ersten Zeitpunkt erste Sensorsignale mittels des wenigstens einen akustischen NLOS-Sensors generiert, wobei - nach einer Auswertung der ersten Sensorsignale - das sich bewegende Objekt 80 detektiert wird, wobei Daten hinsichtlich der Position und/oder Bewegungsrichtung und/oder Geschwindigkeit und/oder Größe des sich bewegenden Objekts 80 bestimmt oder berechnet werden,
-- in einem zweiten Schritt wird das sich bewegende Objekt 80 mittels zweiten vom wenigstens einen LOS-Sensor generierten Sensorsignalen zum zweiten Zeitpunkt detektiert und/oder erkannt, insbesondere aufgrund der Daten hinsichtlich der Position und/oder Bewegungsrichtung und/oder Geschwindigkeit und/oder Größe des sich bewegenden Objekts 80.

Die LOS-Sensoren des Fahrzeugs 20/FZG1 entsprechen insbesondere gängigen nur LOS-geeigneten (line-of-sight) elektrooptische Sensoren von modernen, insbesondere autonom fahrenden, Fahrzeugen wie Lidar und digitale Kameras. Ferner entsprechen die akustischen NLOS-geeigneten Sensoren insbesondere einer Technologie, die es ermöglicht über akustische Detektion (insbesondere durch Beugung und/oder Reflexion) Gegenstände außerhalb des direkten Blickfeldes akustisch, insbesondere unter Nutzung von Mikrofonarrays zu erkennen.

Erfindungsgemäß ist somit insbesondere vorgesehen, dass der akustische NLOS-Sensor bzw. die akustischen NLOS-Sensoren des Fahrzeugs FZG1 das Objekt OBJ1 mittels akustischer non-line-of-sight detection (NLOS) erkennt bzw. erkennen. So kann das Fahrzeug 20 bzw. eine Auswerteeinrichtung des Fahrzeugs 20 (unter Zuhilfenahme von Berechnungsressourcen außerhalb des Fahrzeugs 20 oder aber lediglich unter Benutzung der Ressourcen innerhalb des Fahrzeugs 20) die Position und/oder die Ausdehnung, und im besten Fall auch Richtung und Geschwindigkeit des Objekts 80 messen. Die Messmethodik ist jedoch oftmals in realen Bedingungen nicht ausreichend genau, da je nach Beschaffenheit der Reflexionsfläche ein größerer Informationsgehalt verloren gehen kann und die Berechnungsdauern für das Ergebnis durchaus auch zu lang für die im Fahrzeug 20 befindliche Auswerteeinrichtung (bzw. ein FZG-Board-Computer) sind. Jedoch ist es - auch aufgrund einer lediglich vergleichsweise ungenauen Information über die Position und/oder die Größe und/oder die Richtung und/oder die Geschwindigkeit des Objekts 80 - dem Fahrzeug 20 möglich, sich auf eine potenzielle Gefahr einzustellen, und die anderen elektrooptischen LOS-Sensoren mit hochfrequenten Messungen in die erwartete Gefahren-Richtung von des Objekts OBJ1 richten.

Erfindungsgemäß ist es somit insbesondere vorgesehen, dass die im ersten Schritt generierten ersten Sensorsignale mittels des wenigstens einen akustischen NLOS-Sensors aufgrund von (in Figur 1 in Form eines vom Objekt 80 ausgehenden und zum Fahrzeug 20 hin weisenden Pfeils dargestellten) akustischen Signalen 82 generiert werden, die vom sich bewegenden Objekt 80 ausgehen und - nach einer Reflexion oder Beugung - vom wenigstens einen akustischen NLOS-Sensor des Fahrzeugs 20 detektiert oder empfangen werden. Hierzu ist es erfindungsgemäß insbesondere vorgesehen, dass das Fahrzeug 20 (in Figur 1 in Form eines vom Fahrzeug 20 ausgehenden und zum Objekt 80 hin weisenden mit gestrichelter Darstellung dargestellten Fächers (bzw. Kreissegments)) akustische Primärsignale 22 aussendet und die vom sich bewegenden Objekt 80 ausgehenden akustischen Signale 82 Echosignale der Primärsignale 22 sind, die vom sich bewegenden Objekt 80 reflektiert wurden. Somit ist es erfindungsgemäß vorteilhaft möglich, dass sobald das Objekt 80/OBJ1 dann später (d.h. zum zweiten Zeitpunkt) für die Standard Sensorik mit line-of sight (LOS) Techniken sichtbar wird, das Fahrzeug 20/FZG1 bereits mittels der Zeit- und Wegdifferenz zwischen der initialen akustischen NLOS-Messung und der ersten sichtbaren Messung die Geschwindigkeit des Objekts OBJ1 errechnen kann. Eine potenzielle Gefahr kann somit in vorteilhafter Weise schon früh erkannt werden.

Erfindungsgemäß ist nun insbesondere vorgesehen, dass zur Bestimmung oder Berechnung außerhalb des Fahrzeugs 20 der Daten hinsichtlich der Position und/oder Bewegungsrichtung und/oder Geschwindigkeit und/oder Größe des sich bewegenden Objekts 80 zumindest ein Teil der zum ersten Zeitpunkt generierten ersten Sensorsignale mittels einer Kommunikationsschnittstelle des Fahrzeugs 20 an eine Edge-Cloud-Einrichtung 110 eines Telekommunikationsnetzes 100 übertragen wird und die berechneten Daten hinsichtlich der Position und/oder Bewegungsrichtung und/oder Geschwindigkeit und/oder Größe des sich bewegenden Objekts 80 mittels der Kommunikationsschnittstelle zum Fahrzeug 20 übertragen werden. Typischerweise ist die Berechnung von akustisch detektierten NLOS-Objekten sehr rechenaufwendig. Das Fahrzeug 20/FZG1 kann nach dem Erkennen des Objekts 80/OBJ1 mittels akustischen NLOS-Techniken die erhobenen Daten in die 5G Edge Cloud (d.h. die Edge-Cloud-Einrichtung 110) senden und die Berechnung der Informationen in die 5G Edge Cloud auslagern. Die 5G Edge Cloud liefert das entsprechende Ergebnis (Position, Geschwindigkeitsvektor und Objektgröße zum Zeitpunkt t, d.h. zum zweiten Zeitpunkt bzw. zeitlich nach dem zweiten Zeitpunkt, jedoch jedenfalls zeitlich vor dem ersten Zeitpunkt) an das Fahrzeug 20/FZG1. Erfindungsgemäß können die bisherigen Schritte mehrmals nacheinander erfolgen. Wenn dann das Objekt 80/OBJ1 im Sichtfeld (des Fahrzeugs 20) ist, fragt das Fahrzeug 20/FZG1 über niedrig-Latenz 5G das Rechenergebnis ggfs. nochmals an, um die Daten mit den neuen optischen Daten zusammenzufügen. Die Edge-Cloud hat insbesondere sogar so lange Zeit, das Objekt 80/OBJ1 und seine Merkmale beim ersten und einzigen Mal zu berechnen, bis das Objekt 80/OBJ1 in das Blickfeld des Fahrzeugs 20/FZG1 tritt. Je länger (und somit in der Regel auch je besser) gerechnet wird, umso genauer ist die Information (bzw. kann die Information sein), die das Fahrzeug 20/FZG1 dann verarbeiten kann. Erfindungsgemäß ist jedoch insbesondere bevorzugt, wenn das Fahrzeug 20/FZG1 die Information bezüglich des Objekts 80/OBJ1 mindestens einen FZG-Computer-Berechnungs-Zyklus (von beispielsweise 50ms) vor dem zweiten Zeitpunkt (d.h. vor der LOS-Sichtbarkeit des Objektes 80) erhält, um seine LOS-Sensoren rechtzeitig darauf einrichten zu können.

Erfindungsgemäß ist es somit insbesondere möglich, in vorteilhafter Weise eine Reaktionszeit-Verkürzung im Vergleich zu üblichen Verfahren, die lediglich auf der Nutzung von LOS-Sensoren beruhen, zu erreichen: Sobald das Fahrzeug 20/FZG1 zum Zeitpunkt t (d.h. zeitlich vor dem zweiten Zeitpunkt) eine ausreichend gute Vorinformation über eine potenzielle Gefahr des "den LOS-Sensoren noch unsichtbaren" Objekts 80/OBJ1 erhält, kann das Fahrzeug 20/FZG1 kurz vor dem zweiten Zeitpunkt (auch bezeichnet mit: t+dt) einen Teil seiner Sensorik oder Ausschnitte eines Sensors bereits auf die potentielle Gefahrenstelle des ihm mitgeteilten prognostizierten Sichtbarkeits-Zeitpunkts t+dt des Objekts 80/OBJ1 ausrichten. Das Fahrzeug 20/FZG1 ist dann bei der LOS-Erkennung wesentlich schneller, wenn das Objekt 80/OBJ1 auftaucht, als wenn seine Sensorik die üblichen z.B. Rotationszyklen z.B. eines Lidars oder der Ausrichtung/Auslesung einer Kamera einhält. Wenn ein Fahrzeug 20/FZG1 z.B. einen Lidar Rotationszyklus bzw. einen Verschwenkzyklus der Sensoreinheit von 50 ms hätte, dann müsste das Fahrzeug 20/FZG1 im Mittel 25 ms (d.h. die halbe Zykluszeit von 50 ms) warten, bis es das Objekt ohne Vorwarnung einfängt. Diese 25 ms ist ein erfindungsgemäßes System wegen der Vorprozessierung jedoch schneller, wodurch das Fahrzeug 20/FZG1 im betrachteten Beispiel somit 25 ms schneller auf die Situation reagieren kann.

Somit ist es erfindungsgemäß insbesondere vorgesehen, dass die über die Kommunikationsschnittstelle des Fahrzeugs 20 empfangenen berechneten Daten hinsichtlich der Position und/oder Bewegungsrichtung und/oder Geschwindigkeit und/oder Größe des sich bewegenden Objekts 80 im Fahrzeug 20 genutzt werden, um den wenigstens einen LOS-Sensor oder dessen Auswertungslogik auf die Detektion und/oder Erkennung des sich bewegenden Objekts 80 vorbereitet wird.

Insbesondere ist erfindungsgemäß vorgesehen, dass die akustischen Signale 82 oder aber die akustischen Primärsignale 22 und die akustischen Signale 82 akustische Signale in einem bestimmten Wellenlängen- oder Frequenzbereich, beispielsweise hörbare akustische Signale oder aber nicht hörbare akustische Signale, insbesondere Ultraschallsignale oder aber Infraschallsignale sind.

Somit ist es erfindungsgemäß möglich, Zusatzinformationen, welche durch die Bewegung des Fahrzeugs 20/FZG1 und/oder durch die Bewegung des NLOS-Objektes 80 (bzw. des NLOS-detektierbaren Objekts 80) entstehen, für die Bestimmung der Position und Ausdehnung von Objekten 80 heranzuziehen. Je mehr Bewegung somit beim Fahrzeug 20/FZG1 und/oder beim NLOS-detektierten Objekt 80 vorliegen, umso besser ist es erfindungsgemäß möglich, mittels des Verfahrens bzw. des Systems eine Gefahrenreduktion bzw. eine Kollisionsvermeidung herbeizuführen.

Somit ist es erfindungsgemäß vorgesehen, dass im Straßenverkehr ein Fahrzeug 20/FZG1 mit akustischen Sensoren (Lautsprecher und Mikrofone) über akustische Non-Line-Of-Sight (NLOS) Technologie die Umgebung in Fahrrichtung überwacht. Dabei werden sich bewegende Objekte durch die ständige akustische Überwachung erkannt. Mit der akustischen NLOS Technologie können Ort, Bewegungsrichtung und -geschwindigkeit (des Objekts 80) bestimmt und auch die Art des Objekts (Fußgänger, Tier, Kinderwagen, etc.) analysiert werden. Dabei bieten gerade im Stadtverkehr die ebenen Fahrbahnen und auch Häuserfronten gut reflektierende Ebenen, die die akustische NLOS Analyse unterstützen. Basierend auf der Analyse kann ein Fahrzeug dann automatisiert weitere Maßnahmen einleiten. NLOS bedeutet, dass auch die Objekte erkannt werden können, die nicht auf dem kürzesten direkten Weg frei sichtbar sind insbesondere nicht von den anderen LOS Fahrzeugsensoren erkannt werden können, da ihre Signale nicht auf dem direkten, kürzesten Weg zu dem Objekt gelangen können. Sowohl in Figur 1 als auch in Figur 2 ist ein Szenario dargestellt, bei dem sich das Fahrzeug 20/FZG1 in einem Gebiet etwa mit stehenden Gegenständen bzw. Fahrzeugen 21, 21', 21", z.B. Stadtverkehr, Bushaltestelle oder vor Übergängen, Ampeln, Kreuzungen befindet und sich in einer Bewegungsrichtung (dargestellt in Figur 1 und 2 mittels eines vom Zentrum des Fahrzeugs 20 ausgehenden Pfeils) bewegt. Das Fahrzeug 20/FZG1 verfügt über akustische Sensoren (insbesondere Lautsprecher und Mikrofone bzw. Lautsprecherarrays und/oder Mikrofonarrays). Diese Sensoren sind dazu in der Lage über akustische Non-Line-Of-Sight Technologie, reflektierten Schall so zu analysieren, dass sich Objekte erkennen lassen.

Für diese Technologie können auch handelsübliche Lautsprecher und Mikrofone ausreichen, die jeweils in einem Array nebeneinander gereiht angeordnet sind. Durch das parallele Versenden von akustischen Signalen und das Analysieren dieser Signale in den parallelen Mikrofonen, lassen sich 3D-Objekte errechnen. Auch über eine Reflexionsfläche lassen sich hiermit also auch Objekte 80 im Straßenverkehr erkennen.

Wenn nun zu einem bestimmten Messzeitpunkt ein Objekt 80 mit seinen Koordinaten und seinen Dimensionen erfasst wurde, so kann es auch zum nächst späteren Messzeitpunkt erfasst werden. Durch die Differenz beider Messungen lässt sich dann unter Beachtung der eigenen Fahrtgeschwindigkeit und Position des Fahrzeugs 20/FZG1 ein Bewegungsvektor und eine Position für das erfassten Objekts 80 berechnen.

Es ergibt sich somit, dass erfindungsgemäß eine Auswerteeinheit im Fahrzeug 20 (d.h. bspw. ein Fahrzeug-Computer) die Position, Ausdehnung und Geschwindigkeit von NLOS Objekten 80 relativ zu einem fahrzeugfesten Koordinatensystem kennt und auch relativ zu den Umgebungsobjekten, d.h. der NLOS-Objekten 80, also zu den das NLOS-Objekt verdeckende LOS-Objekten und deren LOS-Nachbarobjekten. Das Fahrzeug 20 erkennt also eine noch hinter (beispielsweise) einem Lastwagen verdeckte Person, die sich schnell bewegt und dabei ist (wegen des bekannten Geschwindigkeitsvektors) sehr bald hinter dem Lastwagen sichtbar (für LOS-Sensoren) zu erscheinen und potenziell abrupt ohne zu stoppen (da in der Kürze der Zeit nicht mehr möglich) in die Fahrbahn des Fahrzeugs 20 zu treten.

Das Fahrzeug 20 nutzt nun diese Technologie, um sich bewegende Objekte (z.B. Personen) hinter Fahrzeugen 21, 21`, 21" oder Straßenecken zu erkennen. Gemessen werden kann im Straßenverkehr über eine gut reflektierende Fläche, wie z.B. die Fahrbahn, die relativ eben und dadurch leicht zu berechnen ist.

Mithilfe der hier beschriebenen Technologie können Gefahren frühzeitig erkannt werden, wodurch das Fahrzeug 20 rechtzeitig entsprechende Maßnahmen einleiten kann, die zu einer Gefahrenvermeidung führen.

In der in den Figuren 1 und 2 angegebenen Beispielsituation wird als Reflexionsfläche lediglich der Boden bzw. die Fahrbahn genannt, jedoch sind die NLOS akustischen Techniken in der Lage auch die Reflexionen an den in den Figuren 1 und 2 eingezeichneten stehenden Fahrzeugen 21, 21', 21" zu nutzen..

In den Zeichnungen Zeichnung sei bei t=to und bei t=t₁=t₀+dt₁ (d.h. letztlich zum ersten Zeitpunkt) die Position und die Objektausdehnung des NLOS-Objektes 80 relativ zu den mittels line-of-sight detektierbaren Objekten (sog. LOS-Objekte) 21, 21', 21", d.h. insbesondere den stehenden Fahrzeugen, und relativ zum Fahrzeug 20 bestimmt worden, wodurch bei t₁ auch der Geschwindigkeitsvektor des NLOS-Objektes 80 bestimmt ist.

Zum Zeitpunkt t=t₂=t₁+dt₂ (d.h. zum zweiten Zeitpunkt) ist das ehemalige NLOS-Objekt 80 bereits in Teilen von LOS Sensoren sichtbar. Diese LOS-Sensoren können aber bereits vor dem Sichtbarwerden von Teilen des NLOS-Objektes 80 vorab rechtzeitig auf diese Zone ausgerichtet werden.

Das Fahrzeug 20/FZG1 erkennt mit Hilfe der beschriebenen akustischen NLOS-Technologie ein NLOS-Objekt 80/OBJ1 hinter einem anderen LOS-Objekt (z.B. parkendes Fahrzeug 21, 21', 21") zum Zeitpunkt to und auch zum Zeitpunkt t₁=t₀+dt₁ und zum Zeitpunkt t₂=t₁+dt₁ (d.h. zum ersten Zeitpunkt) auch seine Geschwindigkeit und NLOS-Objekt Objektausdehnung (zumindest in Teilen des NLOS-Objektes). Als Reflexionsfläche kann hier bei t₀ und auch t₁ entweder eine senkrechte Fläche (z.B. eine Hauswand), oder eine waagerechte Fläche (z.B. eine Straße bzw. Fahrbahn) verwendet werden.

Zum Zeitpunkt t_{1b}=t₁+dt_{1b} wird das Fahrzeug 20/FZG1 seine LOS-Sensoren auf die prognostizierte "Auftauchstelle" des NLOS-Objektes 80 für LOS-Sensoren richten. Wenn das NLOS-Objekt 80 dann zum (zweiten) Zeitpunkt t₂>t_{1b} hinten dem LOS-Objekt auftaucht, können die ersten Objektanteile bereits ohne Verzögerung von den LOS-Sensoren erfasst und Position- und Richtungsmäßig ausgewertet und bewertet werden. Ein anderer noch verdeckter Anteil des Objektes kann weiter mit den NLOS-Sensoren erfasst werden und beide Objektanteile können im Bord-Computer als ein zusammenhängendes Objekt überprüft/definiert werden, wodurch die Objektkonsistenz bestätigt wird und auch die Position des noch verdeckten Anteils eine Kontrolle in der Position erhält.

Je mehr Anteile des ehemals komplett verdeckten NLOS-Objektes 80/OBJ1 für LOS Techniken sichtbar werden, umso mehr wird der Bord-Computer den LOS Auswertungen höheres Gewicht geben als den NLOS Techniken, wenn es um die Bewertung geht, was aus der Lücke zwischen den (insbesondere stehenden) Objekten 21, 21', 21" erscheint und wie wichtig es für Steuerungsmaßnahmen für Fahrbewegungen des Fahrzeugs 20 ist.

Der Bord-Computer (bzw. die Auswerteeinheit bzw. Auswerteeinrichtung) kann aber auch -je nach Qualität der Erfassungen durch die rein NLOS akustischen Sensoren des gesamten NLOS-Objektes, also wenn es noch nicht in Teilen LOS-mäßig erfassbar ist - ebenfalls schon Steuerungsmaßnahmen für Fahrbewegungen des Fahrzeugs 20 starten.

Aufgrund der Differenzen der Messungen zu den Nachbar-Zeitpunkten tᵢ und tⱼ kann das Fahrzeug 20/FZG1 mit akustischer NLOS Technik die Bewegungsrichtung und -geschwindigkeit des Objekts 80 ermitteln. Anhand der gemessenen akustischen Signale, der Bewegungsrichtung und -geschwindigkeit analysiert das Fahrzeug 20/FZG1, welche Rückschlüsse auf die Art des Objekts 80/OBJ1 gezogen werden können, z.B. ob es sich um einen Fußgänger, ein Tier oder einen Kinderwagen handelt, und ob eine potenzielle Gefahrensituation besteht bzw. eintreten kann. Basierend auf dem Ergebnis werden weitere Maßnahmen eingeleitet wie:
-- Ausrichtung / Aktivierung anderer Sensoren (z.B. elektrooptischer Sensoren) auf mögliche Kollisionsstelle,
-- Information über V2X-Kommunikation an andere Verkehrsteilnehmer kommunizieren,
-- Warnsignal ausgeben,
-- ggf. Aktion wie Bremsen/Ausweichen einleiten,
-- Meldung an eine zentrale Stelle im Verkehrs-/Infrastruktursystem.

Insbesondere ergibt sich somit erfindungsgemäß der nachfolgende Ablauf: Das Fahrzeug 20/FZG1 fährt über eine Straße und überprüft mittels der beschriebenen akustischen NLOS Technologie permanent die Umgebung auf potenzielle Gefahrenobjekte.

Das Fahrzeug 20/FZG1 erkennt ein potenzielles Gefahrenobjekt 80, und erfasst dessen Dimensionierung und Koordinaten.

Das Fahrzeug 20/FZG1 erfasst zum nächsten Messzeitpunkt dasselbe Objekt 80, und errechnet aus der Differenz den Bewegungsvektor des Objektes 80 (wenn möglich auch die Art des Objektes).

Das Fahrzeug 20/FZG1 errechnet aus den Informationen eine mögliche Kollisionsgefahr und bewertet die Gefahrensituation; ferner richtet das Fahrzeug 20/FZG1 nun auch andere verfügbare Sensoren auf die mögliche Kollisionsstelle. Bei einer hohen Kollisionsgefahr wird direkt eine der oben genannten Maßnahmen ergriffen. Bei niedriger Gefahr, oder nicht ausreichenden Informationen werden noch weitere Messungen erhoben, sowohl zusätzliche Messpunkte über die akustische NLOS Technologie als auch über andere verfügbare Sensoren, wenn möglich.

Wenn Teile des Objekts 80/OBJ1 mit LOS Technologie sichtbar werden, dann können Überprüfungen auf Objektkonsistenz durchgeführt werden und die Gewichtung bei Entscheidungen mehr und mehr auf den LOS Techniken basieren und ggf. auch Entscheidungen (insbesondere betreffend Fahrzeug-Steuerungsmaßnahmen zur Eigenbewegung des Fahrzeugs 20, die vorher bei komplett verdeckten OBJ1 getroffen wurden) wieder korrigiert werden.

Erfindungsgemäß ist es insbesondere vorteilhaft möglich, dass das Fahrzeug 20 auch die Berechnung des Objektes 80 in die 5G Edge-Cloud auslagert und andere Sensoren (z.B. optische) auf die mögliche Kollisionsstelle fokussiert. Wenn dann die anderen Sensoren das Objekt 80 erfassen, kann in (nahe) Echtzeit ein Rechenergebnis von der Edge-Cloud angefragt werden, um zusammen mit der neuen Messung ein bestmögliches Ergebnis zu errechnen.

Elektrische Fahrzeuge sind dazu verpflichtet ein akustisches Warnsystem zu verwenden, um den Mangel an Motorgeräuschen eines Fahrzeugs mit Verbrennungsmotor zu kompensieren. Diese akustischen Systeme nennen sich Acoustic Vehicle Alert Systems (AVAS) und werden voraussichtlich in Zukunft mehr und mehr verbreitet sein. Die hier beschriebene Technologie basiert auf akustischen Signalen und kann zusammen mit bestehenden AVAS-Technologien integriert werden.

Erfindungsgemäß eignen sich insbesondere handelsübliche akustische Geräte, Lautsprecher und Mikrofone. Diese werden insbesondere in einem Array nebeneinandergeschaltet und können so dreidimensionale Objekte lokalisieren und erfassen.

## Patentansprüche

1. Verfahren zur Gefahrendetektion und/oder Kollisionsvermeidung eines sich bewegenden Fahrzeugs (20) mit mindestens einem sich bewegenden Objekt (80), wobei das wenigstens eine sich bewegende Objekt (80) in einem ersten Zeitpunkt in gerader Sichtlinie (50) ausgehend vom Fahrzeug (20) optisch verdeckt oder nicht sichtbar ist und in einem zweiten Zeitpunkt vom Fahrzeug (20) aus sichtbar oder detektierbar ist, wobei das Fahrzeug (20) wenigstens einen LOS-Sensor, line-of-sight sensor, und wenigstens einen akustischen NLOS-Sensor, non-line-of-sight sensor, aufweist, wobei das Verfahren die folgenden Verfahrensschritte aufweist:
-- in einem ersten Schritt werden zum ersten Zeitpunkt erste Sensorsignale mittels des wenigstens einen akustischen NLOS-Sensors generiert, wobei - nach einer Auswertung der ersten Sensorsignale - das sich bewegende Objekt (80) detektiert wird, wobei Daten hinsichtlich der Position und/oder Bewegungsrichtung und/oder Geschwindigkeit und/oder Größe des sich bewegenden Objekts (80) bestimmt oder berechnet werden,
-- in einem zweiten Schritt wird das sich bewegende Objekt (80) mittels zweiten vom wenigstens einen LOS-Sensor generierten Sensorsignalen zum zweiten Zeitpunkt detektiert und/oder erkannt aufgrund der Daten hinsichtlich der Position und/oder Bewegungsrichtung und/oder Geschwindigkeit und/oder Größe des sich bewegenden Objekts (80),
wobei die Daten hinsichtlich der Position und/oder Bewegungsrichtung und/oder Geschwindigkeit und/oder Größe des sich bewegenden Objekts (80) außerhalb des Fahrzeugs (20) bestimmt oder berechnet werden,
wobei zur Bestimmung oder Berechnung außerhalb des Fahrzeugs (20) der Daten hinsichtlich der Position und/oder Bewegungsrichtung und/oder Geschwindigkeit und/oder Größe des sich bewegenden Objekts (80) zumindest ein Teil der zum ersten Zeitpunkt generierten ersten Sensorsignale mittels einer Kommunikationsschnittstelle des Fahrzeugs (20) an eine Edge-Cloud-Einrichtung (110) eines Telekommunikationsnetzes (100) übertragen wird und die berechneten Daten hinsichtlich der Position und/oder Bewegungsrichtung und/oder Geschwindigkeit und/oder Größe des sich bewegenden Objekts (80) mittels der Kommunikationsschnittstelle zum Fahrzeug (20) übertragen werden, wobei die über die Kommunikationsschnittstelle des Fahrzeugs (20) empfangenen berechneten Daten hinsichtlich der Position und/oder Bewegungsrichtung und/oder Geschwindigkeit und/oder Größe des sich bewegenden Objekts (80) im Fahrzeug (20) genutzt werden, um den wenigstens einen LOS-Sensor oder dessen Auswertungslogik auf die Detektion und/oder Erkennung des sich bewegenden Objekts (80) vorzubereiten.

2. Verfahren nach Anspruch 1, **dadurch gekennzeichnet, dass** die im ersten Schritt generierten ersten Sensorsignale mittels des wenigstens einen akustischen NLOS-Sensors aufgrund von akustischen Signalen (82) generiert werden, die vom sich bewegenden Objekt (80) ausgehen, sich über einen indirekten Ausbreitungspfad (53) ausbreiten und - nach wenigstens einer Reflexion an einer Reflexionsfläche - vom wenigstens einen akustischen NLOS-Sensor detektiert oder empfangen werden.

3. Verfahren nach Anspruch 2, **dadurch gekennzeichnet, dass** das Fahrzeug (20) akustische Primärsignale (22) aussendet und die vom sich bewegenden Objekt (80) ausgehenden akustischen Signale (82) Echosignale der Primärsignale (22) sind, die vom sich bewegenden Objekt (80) reflektiert wurden.

4. Verfahren nach einem der vorhergehenden Ansprüche, **dadurch gekennzeichnet, dass** die Detektion oder Erkennung eines beliebigen Objekts mittels des wenigstens einen LOS-Sensors periodisch mit wenigstens einer vorgegebenen Periodendauer erfolgt, wobei die über die Kommunikationsschnittstelle des Fahrzeugs (20) empfangenen berechneten Daten hinsichtlich der Position und/oder Bewegungsrichtung und/oder Geschwindigkeit und/oder Größe des sich bewegenden Objekts (80) wenigstens eine ganze Periodendauer vor dem zweiten Zeitpunkt erfolgt, um insbesondere die Detektion des sich bewegenden Objekts (80) mittels des wenigstens einen LOS-Sensors schneller und/oder präziser durchführen zu können.

5. System zur Gefahrendetektion und/oder Kollisionsvermeidung eines sich bewegenden Fahrzeugs (20) mit mindestens einem sich bewegenden Objekt (80), wobei das System eine Kommunikationsschnittstelle des sich bewegenden Fahrzeugs (20) und eine Edge-Cloud-Einrichtung (110) eines Telekommunikationsnetzes (100) umfasst,
wobei das wenigstens eine sich bewegende Objekt (80) in einem ersten Zeitpunkt in gerader Sichtlinie (50) ausgehend vom Fahrzeug (20) optisch verdeckt oder nicht sichtbar ist und in einem zweiten Zeitpunkt vom Fahrzeug (20) aus sichtbar oder detektierbar ist, wobei das Fahrzeug (20) wenigstens einen LOS-Sensor, line-of-sight sensor, und wenigstens einen akustischen NLOS-Sensor, non-line-of-sight sensor, aufweist, wobei das System derart konfiguriert ist,
-- erste Sensorsignale mittels des wenigstens einen akustischen NLOS-Sensors zu generieren, wobei das System derart konfiguriert ist,- nach einer Auswertung der ersten Sensorsignale - das sich bewegende Objekt (80) zu detektieren, wobei das System derart konfiguriert ist, Daten hinsichtlich der Position und/oder Bewegungsrichtung und/oder Geschwindigkeit und/oder Größe des sich bewegenden Objekts (80) zu bestimmen oder berechnen,
-- das sich bewegende Objekt (80) mittels zweiten vom wenigstens einen LOS-Sensor generierten Sensorsignalen zum zweiten Zeitpunkt zu detektieren und/oder zu erkennen aufgrund der Daten hinsichtlich der Position und/oder Bewegungsrichtung und/oder Geschwindigkeit und/oder Größe des sich bewegenden Objekts (80),
wobei das System derart konfiguriert ist, die Daten hinsichtlich der Position und/oder Bewegungsrichtung und/oder Geschwindigkeit und/oder Größe des sich bewegenden Objekts (80) außerhalb des Fahrzeugs (20) zu bestimmen oder zu berechnen,
wobei das System derart konfiguriert ist, zur Bestimmung oder Berechnung außerhalb des Fahrzeugs (20) der Daten hinsichtlich der Position und/oder Bewegungsrichtung und/oder Geschwindigkeit und/oder Größe des sich bewegenden Objekts (80) zumindest ein Teil der zum ersten Zeitpunkt generierten ersten Sensorsignale mittels der Kommunikationsschnittstelle des Fahrzeugs (20) an die Edge-Cloud-Einrichtung (110) des Telekommunikationsnetzes (100) zu übertragen und die berechneten Daten hinsichtlich der Position und/oder Bewegungsrichtung und/oder Geschwindigkeit und/oder Größe des sich bewegenden Objekts (80) mittels der Kommunikationsschnittstelle zum Fahrzeug (20) zu übertragen,
wobei das System derart konfiguriert ist, die über die Kommunikationsschnittstelle des Fahrzeugs (20) empfangenen berechneten Daten hinsichtlich der Position und/oder Bewegungsrichtung und/oder Geschwindigkeit und/oder Größe des sich bewegenden Objekts (80) im Fahrzeug (20) zu nutzen, um den wenigstens einen LOS-Sensor oder dessen Auswertungslogik auf die Detektion und/oder Erkennung des sich bewegenden Objekts (80) vorzubereiten.

6. Computerprogramm umfassend Befehle, mit deren Hilfe die Schritte eines Verfahrens nach einem der Ansprüche 1 bis 4 durchführbar sind, wenn das Computerprogramm auf einer programmierbaren Einrichtung des Fahrzeugs und einer Edge-Cloud-Einrichtung (110), ausgeführt wird.

7. Computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 6 speichert oder überträgt oder wobei das computerlesbare Medium oder das Datenträgersignal den auf einer programmierbaren Einrichtung des Fahrzeugs und einer Edge-Cloud-Einrichtung (110), auszuführenden Teil des Computerprogramms nach Anspruch 6 speichert oder überträgt.

## Claims

1. Method for hazard detection and/or collision avoidance of a moving vehicle (20) with at least one moving object (80), wherein the at least one moving object (80) is visually obscured or not visible in a straight line of sight (50) from the vehicle (20) at a first point in time and is visible or detectable from the vehicle (20) at a second point in time, wherein the vehicle (20) comprises at least one LOS sensor, line-of-sight sensor, and at least one acoustic NLOS sensor, non-line-of-sight sensor, wherein the method comprises the following method steps:
- in a first step, first sensor signals are generated at the first point in time by means of the at least one acoustic NLOS sensor, wherein - after evaluation of the first sensor signals - the moving object (80) is detected, wherein data relating to the position and/or movement direction and/or speed and/or size of the moving object (80) are determined or calculated,
- in a second step, the moving object (80) is detected and/or recognised at the second point in time by means of second sensor signals generated by the at least one LOS sensor, on the basis of the data relating to the position and/or movement direction and/or speed and/or size of the moving object (80),
wherein the data relating to the position and/or movement direction and/or speed and/or size of the moving object (80) are determined or calculated outside the vehicle (20) wherein, in order to determine or calculate outside the vehicle (20) the data relating to the position and/or movement direction and/or speed and/or size of the moving object (80), at least a portion of the first sensor signals generated at the first point in time is transmitted to an edge cloud device (110) of a telecommunications network (100) by means of a communications interface of the vehicle (20) and the calculated data relating to the position and/or movement direction and/or speed and/or size of the moving object (80) are transmitted to the vehicle (20) by means of the communications interface,
wherein the calculated data received via the communications interface of the vehicle (20) and relating to the position and/or movement direction and/or speed and/or size of the moving object (80) in the vehicle (20) are used in order to prepare the at least one LOS sensor or the evaluation logic thereof for the detection and/or recognition of the moving object (80).

2. Method as claimed in claim 1, **characterised in that** the first sensor signals generated in the first step are generated by means of the at least one acoustic NLOS sensor on the basis of acoustic signals (82) which emanate from the moving object (80), are propagated via an indirect propagation path (53) and - after at least one reflection at a reflection surface (52) - are detected or received by the at least one acoustic NLOS sensor.

3. Method as claimed in claim 2, **characterised in that** the vehicle (20) emits acoustic primary signals (22) and the acoustic signals (82) emanating from the moving object (80) are echo signals of the primary signals (22) which have been reflected by the moving object (80).

4. Method as claimed in any one of the preceding claims, **characterised in that** the detection or recognition of any object by means of the at least one LOS sensor is effected periodically with at least one predetermined period duration, wherein the calculated data received via the communications interface of the vehicle (20) and relating to the position and/or movement direction and/or speed and/or size of the moving object (80) is effected for at least one whole period duration before the second point in time in order to be able to perform, in particular, the detection of the moving object (80) more rapidly and/or more precisely by means of the at least one LOS sensor.

5. System for hazard detection and/or collision avoidance of a moving vehicle (20) with at least one moving object (80), wherein the system comprises a communications interface of the moving vehicle (20) and an edge cloud device (110) of a telecommunications network (100),
wherein the at least one moving object (80) is visually obscured or not visible in a straight line of sight (50) from the vehicle (20) at a first point in time and is visible or detectable from the vehicle (20) at a second point in time, wherein the vehicle (20) comprises at least one LOS sensor, line-of-sight sensor, and at least one acoustic NLOS sensor, non-line-of-sight sensor, wherein the system is configured to
- generate first sensor signals by means of the at least one acoustic NLOS sensor, wherein the system is configured - after an evaluation of the first sensor signals - to detect the moving object (80), wherein the system is configured to determine or calculate data relating to the position and/or movement direction and/or speed and/or size of the moving object (80),
- detect and/or recognise the moving object (80) at the second point in time by means of second sensor signals generated by the at least one LOS sensor, on the basis of the data relating to the position and/or movement direction and/or speed and/or size of the moving object (80),
wherein the system is configured to determine or calculate the data relating to the position and/or movement direction and/or speed and/or size of the moving object (80) outside the vehicle (20),
wherein, in order to determine or calculate outside the vehicle (20) the data relating to the position and/or movement direction and/or speed and/or size of the moving object (80), the system is configured to transmit at least a portion of the first sensor signals generated at the first point in time to the edge cloud device (110) of the telecommunications network (100) by means of the communications interface of the vehicle (20) and to transmit the calculated data relating to the position and/or movement direction and/or speed and/or size of the moving object (80) to the vehicle (20) by means of the communications interface,
wherein the system is configured to use the calculated data received via the communications interface of the vehicle (20) and relating to the position and/or movement direction and/or speed and/or size of the moving object (80) in the vehicle (20) in order to prepare the at least one LOS sensor or the evaluation logic thereof for the detection and/or recognition of the moving object (80).

6. Computer program comprising commands, by means of which the steps of a method as claimed in any one of claims 1 to 4 can be performed when the computer program is executed on a programmable device of the vehicle and an edge cloud device (110).

7. Computer readable medium provided for storing a computer program, or a data carrier signal provided for transmitting a computer program, wherein the computer readable medium or the data carrier signal stores or transmits the computer program as claimed in claim 6, or wherein the computer readable medium or the data carrier signal stores or transmits the part of the computer program as claimed in claim 6 which is to be executed on a programmable device of the vehicle and an edge cloud device (110).

## Revendications

1. Procédé de détection d'un danger et/ou de prévention d'une collision d'un véhicule en mouvement (20) avec au moins un objet en mouvement (80), dans lequel le au moins un objet en mouvement (80) est optiquement caché ou n'est pas visible à un premier instant sur une ligne de vision directe (50) partant du véhicule (20) et est visible ou détectable à partir du véhicule (20) à un second instant, dans lequel le véhicule (20) comporte au moins un capteur de ligne de vision (line-of-sight sensor, LOS) et au moins un capteur acoustique hors ligne de vision (non-line-of-sight sensor, NLOS), dans lequel le procédé comporte les étapes de procédé suivantes :
- à une première étape, des premiers signaux de capteur sont générés au premier instant au moyen du au moins un capteur acoustique NLOS, dans lequel - après une analyse des premiers signaux de capteur - l'objet en mouvement (80) est détecté, dans lequel des données concernant la position et/ou la direction de déplacement et/ou la vitesse et/ou la taille de l'objet en mouvement (80) sont déterminées ou calculées,
- à une seconde étape, l'objet en mouvement (80) est détecté et/ou identifié au second instant au moyen de seconds signaux de capteur générés par le au moins un capteur LOS, sur la base des données concernant la position et/ou la direction de déplacement et/ou la vitesse et/ou la taille de l'objet en mouvement (80),
dans lequel les données concernant la position et/ou la direction de déplacement et/ou la vitesse et/ou la taille de l'objet en mouvement (80) sont déterminées ou calculées à l'extérieur du véhicule (20),
dans lequel, pour la détermination ou le calcul à l'extérieur du véhicule (20) des données concernant la position et/ou la direction de déplacement et/ou la vitesse et/ou la taille de l'objet en mouvement (80), au moins une partie des premiers signaux de capteur générés au premier instant est transmise au moyen d'une interface de communication du véhicule (20) à un dispositif en périphérie de nuage (110) d'un réseau de télécommunications (100) et les données calculées concernant la position et/ou la direction de déplacement et/ou la vitesse et/ou la taille de l'objet en mouvement (80) sont transmises au véhicule (20) au moyen de l'interface de communication,
dans lequel les données calculées reçues via l'interface de communication du véhicule (20) concernant la position et/ou la direction de déplacement et/ou la vitesse et/ou la taille de l'objet en mouvement (80) sont utilisées dans le véhicule (20) afin de préparer le au moins un capteur LOS ou sa logique d'analyse à la détection et/ou à l'identification de l'objet en mouvement (80).

2. Procédé selon la revendication 1, **caractérisé en ce que** les premiers signaux de capteur générés à la première étape sont générés au moyen du au moins un capteur acoustique NLOS, sur la base de signaux acoustiques (82) qui proviennent de l'objet en mouvement (80), se propagent sur un trajet de propagation indirect (53) et - après au moins une réflexion sur une surface de réflexion (52) - sont détectés ou reçus par le au moins un capteur acoustique NLOS.

3. Procédé selon la revendication 2, **caractérisé en ce que** le véhicule (20) émet des signaux primaires acoustiques (22) et les signaux acoustiques (82) provenant de l'objet en mouvement (80) sont des signaux d'écho des signaux primaires (22) qui ont été réfléchis par l'objet en mouvement (80).

4. Procédé selon l'une des revendications précédentes, **caractérisé en ce que** la détection ou l'identification d'un objet quelconque au moyen du au moins un capteur LOS est réalisée périodiquement avec au moins une période prédéterminée, dans lequel les données calculées reçues via l'interface de communication du véhicule (20) concernant la position et/ou la direction de déplacement et/ou la vitesse et/ou la taille de l'objet en mouvement (80) sont générées au moins une période complète avant le second instant, en particulier afin de pouvoir effectuer plus rapidement et/ou plus précisément la détection de l'objet en mouvement (80) au moyen du au moins un capteurs LOS.

5. Système de détection d'un danger et/ou d'évitement d'une collision d'un véhicule en mouvement (20) avec au moins un objet en mouvement (80),
dans lequel le système comprend une interface de communication du véhicule en mouvement (20) et un dispositif en périphérie de nuage (110) d'un réseau de télécommunications (100),
dans lequel le au moins un objet en mouvement (80) est optiquement caché ou n'est pas visible à un premier instant sur une ligne de vision directe (50) partant du véhicule (20) et est visible ou détectable à partir du véhicule (20) à un second instant, dans lequel le véhicule (20) comporte au moins un capteur de ligne de vision (line-of-sight sensor, LOS) et au moins un capteur acoustique hors ligne de vision (non-line-of-sight sensor, NLOS), dans lequel le système est configuré pour
- générer des premiers signaux de capteur au moyen du au moins un capteur acoustique NLOS, dans lequel le système est configuré pour, - après une analyse des premiers signaux de capteur - détecter l'objet en mouvement (80), dans lequel le système est configuré pour déterminer ou calculer à l'extérieur du véhicule (20) des données concernant la position et/ou la direction de déplacement et/ou la vitesse et/ou la taille de l'objet en mouvement (80),
- détecter et/ou identifier l'objet en mouvement (80) au moyen de seconds signaux de capteur générés par le au moins un capteur LOS au second instant, sur la base des données concernant la position et/ou la direction de déplacement et/ou la vitesse et/ou la taille de l'objet en mouvement (80),
dans lequel le système est configuré pour déterminer ou calculer les données concernant la position et/ou la direction de déplacement et/ou la vitesse et/ou la taille de l'objet en mouvement (80),
dans lequel le système est configuré de manière à, pour la détermination ou le calcul à l'extérieur du véhicule (20) des données concernant la position et/ou la direction de déplacement et/ou la vitesse et/ou la taille de l'objet en mouvement (80), transmettre au dispositif en périphérie de nuage (110) du réseau de télécommunications (100) au moins une partie des premiers signaux de capteur générés au premier instant au moyen de l'interface de communication du véhicule (20), et transmettre au véhicule (20) les données calculées concernant la position et/ou la direction de déplacement et/ou la vitesse et/ou la taille de l'objet en mouvement (80) au moyen de l'interface de communication, dans lequel le système est configuré pour utiliser dans le véhicule (20) les données calculées reçues via l'interface de communication du véhicule (20) concernant la position et/ou la direction de déplacement et/ou la vitesse et/ou la taille de l'objet en mouvement (80) afin de préparer le au moins un capteur LOS ou sa logique d'analyse à la détection et/ou à l'identification de l'objet en mouvement (80) .

6. Programme informatique comprenant des instructions au moyen desquelles les étapes d'un procédé selon l'une des revendications 1 à 4 peuvent être mises en œuvre lorsque le programme informatique est exécuté sur un dispositif programmable du véhicule et un dispositif en périphérie de nuage (110).

7. Support lisible par ordinateur destiné à stocker un programme informatique ou signal porteur de données destiné à transmettre un programme informatique, dans lequel le support lisible par ordinateur ou le signal porteur de données stocke ou transmet le programme informatique selon la revendication 6, ou dans lequel le support lisible par ordinateur ou le signal porteur données stocke ou transmet la partie du programme informatique selon la revendication 6 à exécuter sur un dispositif programmable du véhicule ou un dispositif en périphérie de nuage (110).
